# EUROPÄISCHE PATENTANMELDUNG

(11) **EP 3 907 798 A2**
(43) Veröffentlichungstag der Anmeldung: **10.11.2021**
(21) Anmeldenummer: 21172576.7
(22) Anmeldetag: 06.05.2021
(51) Int. Cl.: H01M 8/0202, H01M 8/026, H01M 8/0258

(54) **VERFAHREN UND VORRICHTUNG ZUR VERWENDUNG BEI DER HERSTELLUNG VON BIPOLARPLATTEN, INSBESONDERE FÜR BRENNSTOFFZELLEN**

(30) Priorität: 07.05.2020 DE 102020112349
(71) Anmelder: Alpha Laser GmbH, 82178 Puchheim (DE)
(72) Erfinder: MEYNDT, Georg, 82515 Wolfratshausen (DE); WARTMANN, Jens, 46242 Botropp (DE); SZYMANSKY, Peter, 46149 Oberhausen (DE)
(74) Vertreter: Manitz Finsterwald Patent- und Rechtsanwaltspartnerschaft mbB

(57) **Zusammenfassung**

Die vorliegende Erfindung betrifft unter anderem ein Verfahren zum Ausbilden eines Strömungsfelds in einem Bipolarplattensubstrat, bei dem ein Bipolarplattensubstrat als Bandmaterial mit einer ersten und einer der ersten Seite gegenüberliegenden zweiten Seite bereitgestellt wird und bei dem das Bandmaterial kontinuierlich gefördert wird, um in dasselbe eine Kanalstruktur zur Bildung eines Strömungsfelds einwalzen zu können.

## Beschreibung

Die vorliegende Erfindung betrifft das Gebiet der Brennstofftechnologie und setzt sich vor allem mit der Herstellung von Bipolarplatten für Brennstoffzellen bzw. für Brennstoffzellenstapel auseinander. Insbesondere betrifft die Erfindung ein Verfahren und eine Vorrichtung zum Ausbilden eines Strömungsfelds in einem Bipolarplattensubstrat, ein Verfahren und eine Vorrichtung zum Verbinden zweier Bipolarplattensubstrate sowie ein Verfahren und eine Vorrichtungsanordnung zur Verwendung bei der Herstellung von Bipolarplatten für Brennstoffzellen.

Ein Brennstoffzellenstapel setzt sich üblicherweise aus mehreren einzelnen Brennstoffzellen zusammen, die schichtartig übereinander bzw. nebeneinander gestapelt sind. Die Einzelzellen werden dabei durch Bipolarplatten voneinander getrennt. Insbesondere wird dabei die Anodenseite einer Einzelzelle von der Kathodenseite einer benachbarten Einzelzelle durch jeweils eine Bipolarplatte rein räumlich getrennt. Darüber hinaus dienen die Bipolarplatten auch als Stromkollektoren, mittels derer der von jeder Einzelzelle erzeugte Strom abgeführt werden kann.

Eine wesentliche Aufgabe der Bipolarplatten ist jedoch die Zufuhr und die Versorgung der Anoden- und Kathodenseite der jeweiligen Einzelzelle mit den jeweiligen Reaktandengasen (Wasserstoff bzw. Sauerstoff im Falle einer Polymerelektrolytbrennstoffzelle). Hierzu ist auf jeder Seite einer Bipolarplatte ein Reaktandengassströmungsfeld in Form einer Kanalstruktur ausgebildet, das sich mäanderförmig über die jeweilige Fläche der Bipolarplatte erstreckt. Beispielweise kann solch eine Kanalstruktur mehrere Stege und Strömungskanäle zum Verteilen der gasförmigen Reaktandengase zu der Anodenseite und Kathodenseite jeder Einzelzelle aufweisen.

Ferner können die Bipolarplatten als Kühlelemente dienen, mittels derer die von einem Brennstoffzellenstapel erzeugte Prozesswärme abgeführt werden kann. Um solch eine Kühlfunktion wahrnehmen zu können, können im Innern der Bipolarplatten Kühlmittelströmungsdurchgänge ausgebildet sein.

Üblicherweise werden derartige Bipolarplatten hergestellt, indem zunächst in einzelnen Plattenrohlingen Strömungsfelder in Form der zuvor beschriebenen Kanalstrukturen zur Verteilung der jeweiligen Reaktandengase bzw. des Kühlmittels erzeugt werden. Dies kann beispielsweise erfolgen, indem die jeweilige Kanalstruktur in den Plattenrohling geprägt, gefräst, geätzt oder beispielsweise durch Hydroformen eingebracht wird. Anschließend können dann zwei auf diese Art und Weise hergestellte Bipolarhalbplatten zu einer Bipolarplatte zusammengefügt werden, so dass durch die Kanalstrukturen zwischen den beiden Bipolarhalbplatten ein Kühlmittelströmungsfeld gebildet wird. Die Kanalstrukturen, die sich auf den beiden Außenseiten der so zusammengefügten Bipolarplatte befinden, dienen hingegen als Reaktandengassströmungsfelder.

Die beiden Bipolarhalbplatten müssen dabei vor dem Zusammenfügen exakt zueinander ausgerichtet werden, um sicherzustellen, dass die einander zugewandten Strömungsfelder exakt miteinander ausgerichtet sind und dass beim anschließenden Verbinden der Bipolarhalbplatten, was beispielsweise durch Verschweißen erfolgen kann, keine Leckstellen auftreten, durch die das Kühlmittel zwischen den Bipolarhalbplatten entweichen kann.

Insgesamt erweist sich die Herstellung derartiger Bipolarplatten daher als verhältnismäßig aufwendig und fehleranfällig, da die einzelnen Plattenrohlinge an unterschiedlichen Bearbeitungsstationen bearbeitet und zwischen den einzelnen Bearbeitungsstationen transportiert werden müssen, bevor sie letztendlich paarweise ausgerichtet und final zu einer Bipolarplatte verbunden werden können.

Der Erfindung liegt daher die Aufgabe zugrunde, die Herstellung von Bipolarplatten zu vereinfachen und zu beschleunigen, ohne dass dies zu Lasten der Ausschussrate fehlerhafter Bipolarplatten geht.

Gemäß einem ersten Aspekt wird diese der Erfindung zu Grunde liegende Aufgabe mit einem Verfahren zum Ausbilden eines Strömungsfelds in einem Bipolarplattensubstrat mit den Merkmalen des Anspruchs 1 sowie mit einer Vorrichtung zum Ausbilden eines Strömungsfelds in einem Bipolarplattensubstrat mit den Merkmalen des Anspruchs 19 gelöst.

Sofern nachfolgend genauer auf das erfindungsgemäße Verfahren zum Ausbilden eines Strömungsfelds in einem Bipolarplattensubstrat und auf die Vorrichtung zum Ausbilden eines Strömungsfelds in einem Bipolarplattensubstrat eingegangen wird, sei an dieser Stelle angemerkt, dass sich die Ausführungen zu dem erfindungsgemäßen Verfahren zum Ausbilden eines Strömungsfelds in einem Bipolarplattensubstrat in entsprechender Weise auf die erfindungsgemäße Vorrichtung zum Ausbilden eines Strömungsfelds in einem Bipolarplattensubstrat übertragen lassen und umgekehrt.

Ferner sei an dieser Stelle vorausgeschickt, dass, obwohl das erfindungsgemäße Verfahren zum Ausbilden eines Strömungsfelds in einem Bipolarplattensubstrat und die erfindungsgemäße Vorrichtung zum Ausbilden eines Strömungsfelds in einem Bipolarplattensubstrat hier im Kontext von Brennstoffzellenanwendungen beschrieben werden, das Verfahren und die Vorrichtung gleichermaßen bei Elektrolyseanwendungen, beispielsweise bei der Chloralkali-Elektrolyse oder der Elektrolyse von Wasserstoff und Kohlendioxid sowie bei Redox-Flow-Batterien, zum Einsatz kommen kann.

Erfindungsgemäß ist es insbesondere vorgesehen, dass das Bipolarplattensubstrat, in dem die einzelnen Strömungsfelder eingebracht werden, nicht etwa in Form einzelner Plattenrohlinge, sondern als ein Bandmaterial bereitgestellt wird, das eine erste und eine der ersten Seite gegenüberliegende zweite Seite aufweist, so dass das Bandmaterial kontinuierlich gefördert werden kann, um darin während des Förderns zumindest eine erste Kanalstruktur mit einer Vielzahl erster Vertiefungen und erster Erhebungen in zumindest die erste Seite des Bandmaterials zur Bildung eines ersten Strömungsfelds einzuwalzen zu können.

Erfindungsgemäß werden also nicht etwa einzelne Plattenrohlinge bzw. Bipolarhalbplatten bearbeitet; vielmehr wird als Ausgangsmaterial für die Bipolarplattenherstellung ein kontinuierliches Bandmaterial vorgesehen, in das während eines Endlosprozesses zumindest ein Strömungsfeld in Form einer Kanalstruktur mit mehreren Vertiefungen und Erhebungen eingebracht wird. Die Kanalstrukturen werden dabei kontinuierlich während des Förderns des Bandmaterials in dasselbe eingewalzt, was beispielsweise durch Rollprägen oder Wälzprägen erfolgen kann. Die Vertiefungen können dabei während des Einwalzens als längliche Nuten ausgebildet werden, wohingegen die Erhebungen als längliche Stege ausgebildet werden können. Alternativ hierzu können mittels des erfindungsgemäßen Verfahrens auch lokal begrenzte Vertiefungen und/oder lokal begrenzte Erhebungen durch Rollprägen und/oder Wälzprägen in das Bandmaterial eingewalzt werden.

Bei dem Bandmaterial kann es sich beispielsweise um ein metallisches Bandmaterial wie beispielsweise eine Metallfolie handeln, die mit einer Dicke zwischen 50 µm und 1000 µm bzw. 1 mm bereitgestellt werden kann. Als geeignete Metalle und Metalllegierungen für die Metallfolien können dabei insbesondere Aluminium, Kupfer, Titan, Platin, Edelstahl, Tantal, Niob sowie Legierungen und Kombinationen daraus zum Einsatz kommen.

Gegebenenfalls kann das Bandmaterial vor oder nach dem Einwalzen der jeweiligen Kanalstruktur mit einer Beschichtung versehen werden, um beispielsweise die Korrosionsbeständigkeit des Bipolarplattensubstrats zu verbessern. Gleichermaßen kann das Bipolarplattensubstrat vor oder nach dem Einwalzen der jeweiligen Kanalstruktur mit einer hydrophilen oder hydrophoben Beschichtung versehen werden, um so Produktwasser, das sich während des Betriebs einer Brennstoffzelle in den Strömungsfeldern bilden kann, leichter entfernen zu können.

Wie bereits erwähnt, wird im Rahmen des erfindungsgemäßen Verfahrens zum Ausbilden eines Strömungsfelds in einem Bipolarplattensubstrat zumindest eine erste Kanalstruktur kontinuierlich in ein Bandmaterial eingewalzt. Hierzu kann sich das erfindungsgemäße Verfahren der erfindungsgemäßen Vorrichtung bedienen, mittels derer in einem Bipolarplattensubstrat ein Strömungsfeld ausgebildet werden kann.

Die erfindungsgemäße Vorrichtung verfügt dabei über zwei gegensinnig rotierende Prägewalzen, zwischen denen ein Prägewalzenspalt zur Aufnahme des zu prägenden Bipolarplattensubstrats ausgebildet ist. Eine der beiden Prägewalzen weist dabei auf ihrer Umfangsfläche zumindest eine erste Prägestruktur auf, die komplementär zu einem in die erste Seite des Bipolarplattensubstrats einzuprägenden ersten Strömungsfeld ausgebildet ist. Bei diesem ersten Strömungsfeld handelt es sich um eine erste Kanalstruktur mit einer Vielzahl erster Vertiefungen in Form von beispielsweise länglichen Kanälen und erster Erhebungen in Form von beispielsweise mehreren länglichen Stegen. Das Bandmaterial kann somit kontinuierlich der Vorrichtung und insbesondere den beiden gegensinnig rotierenden Prägewalzen zugeführt werden, woraufhin zumindest eine der beiden Prägewalzen in das als Bandmaterial zugeführte Bipolarplattensubstrat ein Strömungsfeld einwalzt.

Die erste Prägewalze kann dabei auf ihrer Umfangsfläche eine oder mehrere erste Prägestrukturen aufweisen, wobei die Abwicklung einer jeden Prägestruktur einem vollständigen Strömungsfeld entspricht. Weist also die Prägewalze auf ihrer Umfangsfläche nur eine einzige Prägestruktur auf, so bedarf es einer vollständigen Umdrehung der Prägewalze, um ein vollständiges Strömungsfeld in das Bandmaterial einwalzen zu können. Weist die erste Prägewalze hingegen auf ihrer Umfangsoberfläche mehrere erste Prägestrukturen auf, so werden im Rahmen einer Umdrehung der ersten Prägewalze mehrere Strömungsfelder in das Bipolarplattensubstrat eingewalzt.

Nachdem in der zuvor beschriebenen Art und Weise in die erste Seite des Bandmaterials eine erste Kanalstruktur zur Bildung eines ersten Strömungsfelds eingewalzt wurde, kann es gemäß einer weiteren Ausführungsform vorgesehen sein, dass danach eine zweite Kanalstruktur mit einer Vielzahl zweiter Vertiefungen in Form von vorzugsweise länglichen Kanälen und zweiter Erhebungen in Form von vorzugsweise mehreren länglichen Stegen in die zweite Seite des Bandmaterials zur Bildung eines zweiten Strömungsfelds eingewalzt wird, wozu ein zweites Prägewalzenpaar zum Einsatz kommen kann.

Gemäß einer bevorzugten Ausführungsform kann es jedoch vorgesehen sein, dass die zweite Kanalstruktur in die zweite Seite des Bandmaterials zur Bildung eines zweiten Strömungsfelds bereits während des Einwalzens des ersten Strömungsfelds in die erste Seite des Bandmaterials eingewalzt wird. Hierzu kann die zweite der beiden Prägewalzen auf ihrer Umfangsfläche wie die erste Prägewalze eine oder mehrere Prägestrukturen aufweisen, die komplementär zu einem in die zweite Seite des Bipolarplattensubstrats einzuprägenden zweiten Strömungsfelds ausgebildet sind, das durch eine zweite Kanalstruktur mit einer Vielzahl zweiter Vertiefungen und zweiter Erhebungen gebildet wird.

Zur Ausbildung der zweiten Kanalstruktur wird somit kein zweites Prägewalzenpaar benötigt; vielmehr weist die erfindungsgemäße Vorrichtung lediglich ein einziges, einen Prägewalzenspalt bildendes Prägewalzenpaar auf, wobei mit der ersten Prägewalze in der ersten Seite des Bandmaterials ein erstes Strömungsfeld und mit der zweiten Prägewalze in der zweiten Seite des Bandmaterials ein zweites Strömungsfeld erzeugt werden kann.

Wie die erste Prägewalze kann dabei auch die zweite Prägewalze auf ihrer Umfangsfläche eine oder mehrere zweite Prägestrukturen aufweisen, wobei die Abwicklung einer jeden zweiten Prägestruktur einem vollständigen Strömungsfeld entspricht. Weist also die zweite Prägewalze auf ihrer Umfangsfläche nur eine einzige Prägestruktur auf, so bedarf es einer vollständigen Umdrehung der zweiten Prägewalze, um ein vollständiges Strömungsfeld in das Bandmaterial einwalzen zu können. Weist die zweite Prägewalze hingegen auf ihrer Umfangsoberfläche mehrere zweite Prägestrukturen auf, so werden im Rahmen einer Umdrehung der zweiten Prägewalze mehrere Strömungsfelder in das Bipolarplattensubstrat eingewalzt.

Gemäß einer weiteren Ausführungsform kann es vorgesehen sein, dass die beiden Prägewalzen und insbesondere die daran vorgesehenen ersten bzw. zweiten Prägestrukturen zumindest teilweise ineinander eingreifen, so dass zumindest einige der zweiten Vertiefungen einer jeweiligen ersten Erhebung und zumindest einige der ersten Vertiefungen einer jeweiligen zweiten Erhebung entsprechen. Mit anderen Worten kann unter Verwendung derartiger ineinander eingreifender Prägewalzen das Bandmaterial so umgeformt werden, dass sich die Vertiefungen bzw. die Kanäle, die entlang der ersten Seite des Bandmaterials ausgebildet sind, in die Erhebungen bzw. Stege hinein erstrecken, die entlang der zweiten Seite des Bandmaterials ausgebildet sind bzw. werden.

Um mittels der erfindungsgemäßen Vorrichtung unterschiedlich dicke Bandmaterialien verarbeiten zu können, kann es gemäß einer weiteren Ausführungsform vorgesehen sein, dass die Größe des Prägewalzenspalts zur Anpassung an unterschiedlich dicke Bipolarplattensubstrate eingestellt werden kann. Hierzu kann es beispielsweise vorgesehen sein, dass die Position der ersten Prägewalze und/oder die Position der zweiten Prägewalze senkrecht zur Ebene des Bipolarplattensubstrats verändert werden kann. Die Größe des Prägewalzenspalts kann somit exakt auf die Dicke des jeweiligen Bipolarplattensubstrats eingestellt werden.

Zusätzlich oder alternativ hierzu kann die Größe des Prägewalzenspalts auch verändert werden, indem das Prägewalzenpaar durch ein anderes Prägewalzenpaar mit anderem Durchmesser ersetzt wird. In diesem Fall bedarf es keiner Positionsveränderung der jeweiligen Prägewalzen, um die Größe des Prägewalzenspalts verändern zu können.

Gemäß einer weiteren Ausführungsform kann es vorgesehen sein, dass die Vorrichtung stromaufwärts und/oder stromabwärts der beiden Prägewalzen eine Heizeinrichtung zum Erwärmen des Bipolarplattensubstrats vor und/oder nach dem Durchlaufen des Prägewalzenspalts aufweist, um so das Bandmaterial stromaufwärts und/oder stromabwärts der Stelle, an der das erste Strömungsfeld und/oder das zweite Strömungsfeld in das Bandmaterial eingewalzt werden/wird, während des Förderns temperieren zu können. Als Wärmequelle kann dabei solch eine Heizeinrichtung mehrere Laserdioden, zumindest eine Induktionsspule und/oder zumindest einen Heizstab umfassen.

Gemäß einer weiteren Ausführungsform kann es vorgesehen sein, dass die Temperatur, auf die das Bandmaterial mittels solch einer Heizeinrichtung erwärmt wird, auf eine vorgegebene Prozesstemperatur eingeregelt wird, die sich für das Einwalzen der jeweiligen Kanalstrukturen eignet. Hierzu kann eine Temperaturregeleinrichtung vorgesehen sein, welche zur Regelung der Temperatur die jeweilige Heizeinrichtung auf die vorgegebene Prozesstemperatur für das Einwalzen der Kanalstrukturen eingerichtet ist.

Um das jeweilige Medium (Reaktandengas, Kühlmittel) dem jeweils zugehörigen Strömungsfeld zuführen bzw. von dem jeweiligen Strömungsfeld wieder abführen zu können, wenn die Bipolarplatte in einem Brennstoffzellenstapel eingebaut ist, weisen die Bipolarplatten üblicherweise ein oder mehrere Öffnungen auf, durch die dem jeweiligen Strömungsfeld das jeweilige Medium zu- bzw. davon wieder abgeführt werden kann. Um diese Öffnungen herstellen zu können, ohne dass dabei die jeweiligen Strömungsfelder in unerwünschter Weise verformt werden, kann es gemäß einer weiteren Ausführungsform vorgesehen sein, dass die Vorrichtung stromaufwärts der beiden Prägenwalzen und insbesondere auch stromaufwärts der Heizeinrichtung eine Stanzeinrichtung aufweist, mittels derer die jeweiligen Medienzu- bzw. -abfuhröffnungen in dem Bipolarplattensubstrat erzeugt werden können. Beispielsweise kann die in Rede stehende Stanzeinrichtung zwei gegensinnig rotierende Stanzwalzen umfassen, zwischen denen ein Stanzwalzenspalt zur Aufnahme des zu stanzenden und nachfolgend zu prägenden Bipolarplattensubstrats ausgebildet ist.

Gemäß einer bevorzugten Ausführungsform kann es dabei vorgesehen sein, dass die Größe des Stanzwalzenspalts wie die Größe des Prägewalzenspalts zur Anpassung an unterschiedlich dicke Bipolarplattensubstrate eingestellt werden kann. Hierzu kann es beispielsweise vorgesehen sein, dass die Position der einen Stanzwalze und/oder die Position der anderen Stanzwalze senkrecht zur Ebene des Bipolarplattensubstrats verändert werden kann. Zusätzlich oder alternativ hierzu kann die Größe des Stanzwalzenspalts auch dadurch verändert werden, dass die Stanzwalzen durch ein anderes Paar Stanzwalzen mit einem anderen Durchmesser ersetzt werden.

Anstelle die Medienzu- und -abfuhröffnungen des Bipolarplattensubstrats zu stanzen, kann es gemäß einer weiteren Ausführungsform vorgesehen sein, die in Rede stehenden Medienzu- bzw. -abfuhröffnungen in das Bipolarplattensubstrat einzulasern. Da hierbei, anders als beim Prägen der in Rede stehenden Öffnungen, keine Gefahr besteht, das Bipolarplattensubstrat durch mechanische Beanspruchung zu verformen, können die in Rede stehenden Medienzu- bzw. -abfuhröffnungen unter Verwendung von Laserstrahlung sowohl stromaufwärts als auch stromabwärts der Stelle, an der die Kanalstrukturen in das Bandmaterial eingewalzt werden, erzeugt werden.

Da sich jedoch das Bipolarplattensubstrat aufgrund der Lasereinstrahlung erwärmen und damit verformen kann, kann es sich als vorteilhaft erweisen, das Bandmaterial während des Einlaserns der in Rede stehenden Öffnungen zu kühlen, um so einer temperaturbedingten Verformung des Bipolarplattensubstrats entgegenzuwirken. Im Falle einer entsprechenden Kühlung des Bipolarplattensubstrats ist es somit auch möglich, die in Rede stehenden Medienzu- bzw. -abfuhröffnungen stromabwärts der Prägewalzen in das als Bandmaterial bereitgestellte Bipolarplattensubstrat einzulasern.

Da das Bandmaterial im Rahmen des erfindungsgemäßen Verfahrens direkt von den Stanzwalzen zu den Prägewalzen weitergefördert wird, kann die erfindungsgemäße Vorrichtung gemäß einer weiteren Ausführungsform eine Geschwindigkeitsregeleinrichtung umfassen, welche eingerichtet ist, um die Stanzwalzen und die Prägewalzen antreibende Motoren so zu regeln, dass die Stanzwahlen und die Prägewalzen mit derselben Umfangsgeschwindigkeit rotieren. Durch eine derartige Geschwindigkeitssynchronisierung kann sichergestellt werden, dass die Strömungsfelder im Rahmen eines Endlosverfahrens in das als Bandmaterial bereitgestellte Bipolarplattensubstrat eingewalzt werden können, ohne dass es einer temporären Zwischenspeicherung des bereits mit Medienzu- bzw. -abfuhrkanälen versehenen Bandmaterials bedarf. Das Bandmaterial kann somit direkt und kontinuierlich von der Stanzeinrichtung zu den Prägewalzen weitergefördert werden, wodurch die Taktzeiten bei der Herstellung von Bipolarplatten optimiert werden können.

Gemäß noch einer weiteren Ausführungsform kann es vorgesehen sein, dass das Einwalzen der ersten Kanalstruktur und/oder der zweiten Kanalstruktur in das Bandmaterial sowie das Erwärmen derselben unter Schutzgasatmosphäre durchgeführt wird. Hierdurch kann der Entstehung von Oxiden an der Oberfläche des metallischen Bandmaterials während seiner Bearbeitung entgegengewirkt werden. Hierzu kann die erfindungsgemäße Vorrichtung zumindest teilweise in einem Gehäuse angeordnet sein, dessen Innenraum gegenüber der Umgebungsatmosphäre abgedichtet ist und das zumindest die Prägewalzen, vorzugsweise jedoch auch die zumindest eine Heizeinrichtung aufnimmt.

Zwar könnten die Bandmaterialrollen, von denen das Bipolarplattensubstrat den Prägewalzen kontinuierlich zugeführt wird, ebenfalls in dem in Rede stehenden Gehäuses angeordnet sein; in diesem Falle wäre jedoch das Gehäusevolumen und damit die Menge an benötigtem Schutzgas verhältnismäßig groß. Dementsprechend kann es gemäß einer weiteren Ausführungsform vorgesehen sein, dass das Gehäuse nicht nur Öffnungen für die Zu- und Abfuhr eines Schutzgases sondern auch Schlitze zur Zuführung eines Bipolarplattensubstrats in das Gehäuse hinein und aus demselben heraus aufweist. In diesem Falle können die Bandmaterialrollen außerhalb des Gehäuses bereitgestellt werden, wodurch das Gehäusevolumen und somit das benötigte Schutzgas auf ein Mindestmaß reduziert werden kann, da sich in dem Gehäuse lediglich die erfindungsgemäße Vorrichtung, nicht jedoch die Bandmaterialrollen befinden.

Werden mittels des erfindungsgemäßen Verfahrens bzw. mittels der erfindungsgemäßen Vorrichtung auf beiden Seiten eines als Bandmaterial bereitgestellten Bipolarplattensubstrats Strömungsfelder eingewalzt, so können anschließend einzelne Bipolarplattenabschnitte von dem Bandmaterial abgetrennt und unmittelbar als Bipolarplatte verwendet werden, sofern keine Kühlung derselben erforderlich ist. In diesem Falle dient das auf der ersten Seite des Bipolarplattensubstrats ausgebildete Strömungsfeld beispielsweise zur Verteilung von gasförmigem Wasserstoff und somit als Reaktandengassströmungsfeld, wohingegen das auf der zweiten Seite des Bandmaterials ausgebildete Strömungsfeld der Verteilung von Sauerstoff somit ebenfalls als Reaktandengassströmungsfeld dient.

Bedarf es jedoch einer Bipolarplattenkühlung, so ist es erforderlich, zwei Bipolarhalbplatten, welche unter Verwendung des erfindungsgemäßen Verfahrens bzw. der erfindungsgemäßen Vorrichtung zum Ausbilden eines Strömungsfelds in einem Bipolarplattensubstrat hergestellt werden können, miteinander zu verbinden, um dazwischen in der gewünschten Weise ein Kühlmittelströmungsfeld zu bilden.

Dementsprechend werden gemäß einem weiteren Aspekt der vorliegenden Erfindung ein Verfahren den Merkmalen des Anspruchs 7 und eine Vorrichtung den Merkmalen des Anspruchs 28 zum Verbinden zweier Bipolarplattensubstrate vorgeschlagen.

Sofern nachfolgend genauer auf das erfindungsgemäße Verfahren zum Verbinden zweier Bipolarplattensubstrate und auf die Vorrichtung zum Verbinden zweier Bipolarplattensubstrate eingegangen wird, sei an dieser Stelle angemerkt, dass sich die Ausführungen zu dem erfindungsgemäßen Verfahren zum Verbinden zweier Bipolarplattensubstrate in entsprechender Weise auf die erfindungsgemäße Vorrichtung zum Verbinden zweier Bipolarplattensubstrate übertragen lassen und umgekehrt.

Ferner sei an dieser Stelle vorausgeschickt, dass, obwohl das erfindungsgemäße Verfahren zum Verbinden zweier Bipolarplattensubstrate und die erfindungsgemäße Vorrichtung zum Verbinden zweier Bipolarplattensubstrate hier im Kontext von Brennstoffzellenanwendungen beschrieben werden, das Verfahren und die Vorrichtung gleichermaßen bei Elektrolyseanwendungen, beispielsweise bei der Chloralkali-Elektrolyse oder der Elektrolyse von Wasserstoff und Kohlendioxid sowie bei Redox-Flow-Batterien, zum Einsatz kommen kann.

Gemäß dem erfindungsgemäßen Verfahren zum Verbinden zweier Bipolarplattensubstrate wird ein vorzugsweise metallisches Bipolarplattensubstrat als ein erstes Bandmaterial bereitgestellt, das eine erste Seite, in der ein erstes Strömungsfeld in Form einer ersten Kanalstruktur ausgebildet ist, und eine der ersten Seite gegenüberliegende zweite Seite aufweist, in der ein zweites Strömungsfeld in Form einer zweiten Kanalstruktur ausgebildet ist. Gleichermaßen wird ein zweites vorzugsweise metallisches Bipolarplattensubstrat als ein zweites Bandmaterial bereitgestellt, das eine erste Seite, in der ein erstes Strömungsfeld in Form einer ersten Kanalstruktur ausgebildet ist, und eine der ersten Seite gegenüberliegende zweite Seite aufweist, in der ein zweites Strömungsfeld in Form einer zweiten Kanalstruktur ausgebildet ist.

Obwohl das erste und das zweite Strömungskanal in dem Bandmaterial sowohl des ersten als auch des zweiten Bipolarplattensubstrats unter Verwendung beliebiger Verfahren und Vorrichtungen hergestellt werden können, kann es gemäß einer Ausführungsform vorgesehen sein, dass das erste und das zweite Strömungsfeld in dem Bandmaterial sowohl des ersten als auch des zweiten Bipolarplattensubstrats mittels des zuvor beschriebenen Verfahrens bzw. der zuvor beschriebenen Vorrichtung ausgebildet werden.

Die auf diese Weise vorbereiteten Bandmaterialien werden dabei kontinuierlich mit derselben Fördergeschwindigkeit weitergefördert und derart miteinander in Anlage gebracht, dass die zweite Seite des ersten Bandmaterials mit der zweiten Seite des zweiten Bandmaterials während des Förderns der beiden Bandmaterialien in Anlage gelangt. Anschließend kann dann die zweite Seite des ersten Bandmaterials mit der zweiten Seite des zweiten Bandmaterials während des Förderns der beiden Bandmaterialien verbunden werden. Hierzu kann die Vorrichtung zum Verbinden der beiden Bandmaterialien zwei gegensinnig rotierende Fügewalzen umfassen, zwischen denen ein Fügewalzenspalt zur Aufnahme und zum Zusammenpressen der beiden miteinander zu verbindenden Bipolarplattensubstrate ausgebildet ist.

Um zu verhindern, dass die Strömungsfelder der beiden Bipolarplattensubstrate durch die beiden Fügewalzen verformt werden, kann die erste der beiden Fügewalzen auf ihrer Umfangsfläche zumindest eine erste Fügestruktur zum zumindest bereichsweisen Eingriff in das erste Strömungsfeld des ersten Bipolarplattensubstrats und insbesondere zum Eingriff in dessen Vertiefungen aufweisen, wohingegen die zweite der beiden Fügewalzen auf ihrer Umfangsfläche zumindest eine zweite Fügestruktur zum zumindest bereichsweisen Eingriff in das erste Strömungsfeld des zweiten Bipolarplattensubstrats und insbesondere zum Eingriff in dessen Vertiefungen aufweisen kann. Dadurch, dass die Fügestrukturen der beiden Fügewalzen in die Strömungsfelder und insbesondere in deren Vertiefungen bzw. Kanäle eingreifen, können die beiden Bipolarplattensubstrate mittels der beiden Fügewalzen gegeneinandergepresst werden, ohne dass dies in einer unerwünschten Verformung der Bipolarplattensubstrate und insbesondere deren Strömungsfelder resultiert.

Die Abwicklung der ersten Fügestruktur der ersten Fügewalze kann dabei der ersten Kanalstruktur des ersten Strömungsfelds des ersten Bipolarplattensubstrats entsprechen, wohingegen die Abwicklung der zweiten Fügestruktur der zweiten Fügewalze der Kanalstruktur des ersten Strömungsfelds des zweiten Bipolarplattensubstrats entsprechen kann. Werden daher beispielsweise die Strömungsfelder beider Bipolarplattensubstrate mittels der bereits zuvor beschriebenen Vorrichtung zum Ausbilden eines Strömungsfelds in einem Bipolarplattensubstrat erzeugt, so kann die erste Fügestruktur der ersten Fügewalze der ersten Prägestruktur der ersten Prägewalze einer ersten Vorrichtung zum Ausbilden eines Strömungsfelds in einem Bipolarplattensubstrat entsprechen, wohingegen die zweite Fügestruktur der zweiten Fügewalze der ersten Prägestruktur der ersten Prägewalze einer zweiten Vorrichtung zum Ausbilden eines Strömungsfelds in einem Bipolarplattensubstrat entsprechen kann.

Die erste Fügewalze entspricht somit gewissermaßen hinsichtlich ihrer Struktur der ersten Prägewalze zur Herstellung eines ersten Strömungsfelds in einem ersten Bipolarplattensubstrate, wohingegen die zweite Fügewalze hinsichtlich ihrer Struktur der ersten Prägewalze zum Herstellen eines ersten Strömungsfelds in einem zweiten Bipolarplattensubstrat entspricht. Wird also beispielsweise mit einer Prägewalze ein erstes Reaktandengasströmungsfeld in einem ersten Bipolarplattensubstrat erzeugt und wird mittels einer anderen Prägewalze ein zweites Reaktandengasströmungsfeld in einem zweiten Bipolarplattensubstrat erzeugt, so ist die Abwicklung der beiden Fügewalzen im Wesentlichen komplementär zur Gestalt der beiden Reaktandengasströmungsfelder ausgebildet.

Zwar können die beiden Bipolarplattensubstrate mittels der beiden Fügewalzen miteinander verklebt werden, wozu ein geeigneter Klebstoff auf die zweite Seite zumindest eines Bandmaterials aufgebracht werden müsste, bevor die beiden Bandmaterialien miteinander in Anlage gebracht werden; alternativ hierzu können die beiden Bandmaterialien jedoch auch miteinander verschweißt werden.

Gemäß einer weiteren Ausführungsform kann es daher vorgesehen sein, dass die erste Fügestruktur der ersten Fügewalze und/oder die zweite Fügestruktur der zweiten Fügewalze eine oder mehrere Schweißelektroden zum Widerstandsschweißen und/oder Schweißsonotroden zum Ultraschallschweißen aufweist.

Während die beiden Bandmaterialien miteinander in Anlage gebracht und gegeneinander gepresst werden, können somit die beiden Bandmaterialien gleichzeitig miteinander verschweißt werden, was in gewünschter Weise in einer Erhöhung der Taktzeiten bei der Herstellung von Bipolarplatten resultiert.

Da die Fügewalzen bzw. die daran ausgebildeten Fügestrukturen somit gleichermaßen als Schweißelektrode bzw. Schweißsonotrode dienen, werden somit die zweiten Seiten der beiden Bandmaterialien durch Rollennahtschweißen und insbesondere durch Widerstandsrollennahtschweißen miteinander verschweißt, da die beiden Bandmaterialien kontinuierlich durch den Fügewalzenspalt gefördert und darin mittels der beiden Fügewalzen miteinander verschweißt werden.

Sind die außenliegenden Strömungsfelder der beiden miteinander zu verbindenden Bipolarplattensubstrate identisch zueinander ausgebildet, können somit die Erhebungen des zweiten Strömungsfelds des ersten Bandmaterials mit den Erhebungen des zweiten Strömungsfelds des zweiten Bandmaterials verschweißt werden, und zwar vorzugsweise punktuell. Alternativ hierzu können die Erhebungen des zweiten Strömungsfelds des ersten Bandmaterials mit bzw. in den Vertiefungen des zweiten Strömungsfelds des zweiten Bandmaterials verschweißt werden, und zwar ebenfalls vorzugsweise punktuell, sofern die Strömungsfelder des ersten und des zweiten Bipolarplattensubstrats unterschiedlich ausgebildet sind bzw. werden.

Um ein zwischen den zwei miteinander verbundenen Bipolarplattensubstraten gebildete Kühlmittelströmungsfeld nach außen hin abzudichten, können die beiden Bandmaterialien gemäß einer weiteren Ausführungsform entlang eines die ersten und die zweiten Strömungsfelder umgebenden Umfangs miteinander verschweißt werden, und zwar vorzugsweise kontinuierlich. In diesem Fall kann von einem zusätzlichen Dichtungsmaterial zur Abdichtung des Kühlmittelströmungsfeld abgesehen werden.

Um mittels der erfindungsgemäßen Vorrichtung unterschiedlich dicke Bipolarplattensubstrate miteinander verbinden zu können, kann es gemäß einer weiteren Ausführungsform vorgesehen sein, dass die Größe des Fügewalzenspalts gezielt eingestellt werden kann. Insbesondere kann es hierzu vorgesehen sein, dass die Position der ersten Fügewalze und/oder die Position der zweiten Fügewalze senkrecht zur Ebene des jeweiligen Bipolarplattensubstrats verändert werden kann. Zusätzlich oder alternativ hierzu kann die Größe des Fügewalzenspalts dadurch verändert werden, dass die Fügewalzen durch ein Paar Fügewalzen mit anderem Durchmesser ersetzt bzw. ausgetauscht werden.

Gemäß einer weiteren Ausführungsform können die beiden Fügewalzen zusätzlich aufeinander zu vorgespannt sein, um so ungeachtet der Größe des jeweiligen Fügespalts die beiden Bipolarplatten mit einer gewünschten Vorspannkraft zusammenpressen zu können.

Gemäß noch einer weiteren Ausführungsform können das erste Bandmaterial und/oder das zweite Bandmaterial stromaufwärts der Stelle, an der die zweiten Seiten der beiden Bandmaterialien miteinander verbunden werden, während des Förderns kontinuierlich erwärmt werden. Hierzu kann die Vorrichtung stromaufwärts der beiden Fügewalzen eine Heizeinrichtung zum Erwärmen jedes Bipolarplattensubstrats vor dem Durchlaufen des Fügespalts aufweisen. Als Wärmequelle kann hierzu die jeweilige Heizeinrichtung mehrere Laserdioden, zumindest eine Induktionsspule und/oder zumindest einen Heizstab umfassen. Mittels einer derartigen Heizeinrichtung kann die Temperatur, auf die das jeweilige Bandmaterial erwärmt wird, auf eine vorgegebene Prozesstemperatur zur Vorbereitung des nachfolgenden Schweißvorgangs eingeregelt werden, wozu die Vorrichtung vorzugsweise über eine entsprechende Temperaturregeleinrichtung verfügen kann.

Ferner kann es gemäß einer weiteren Ausführungsform vorgesehen sein, dass das erste Bandmaterial und/oder das zweite Bandmaterial stromabwärts der Stelle, an der die zweiten Seiten der beiden Bandmaterialien miteinander verbunden werden, während des Förderns kontinuierlich erwärmt oder gekühlt werden. Auch hierzu kann die Vorrichtung stromabwärts der beiden Fügewalzen eine Heizeinrichtung zum Erwärmen der miteinander verbunden Bipolarplattensubstrate nach dem Durchlaufen des Fügewalzenspalts aufweisen. Als Wärmequelle kann dabei auch diese Heizeinrichtung wiederum mehrere Laserdioden, zumindest eine Induktionsspule und/oder zumindest einen Heizstab umfassen. Somit lässt sich die Temperatur, auf die das Bandmaterial erwärmt oder gekühlt wird, auf eine vorgegebene Prozesstemperatur einregeln, um so beispielsweise unerwünschte Materialspannungen zu vermeiden, die ansonsten aufgrund eines abrupten Temperaturabfalls nach dem Verschweißen der beiden Bipolarplattensubstrate auftreten können.

Nachdem die beiden Bipolarplattensubstrate in der zuvor beschriebenen Art und Weise miteinander verbunden und gegebenenfalls anschließend temperiert wurden, können anschließend von den beiden miteinander verbundenen Bandmaterialien während des Förderns sukzessive einzelne Bipolarplattenabschnitte abgetrennt werden. Hierzu kann die Vorrichtung zwei gegensinnig rotierende Trennwalzen umfassen, die zur Abtrennung von entsprechenden Bipolarplattenabschnitten von den Bipolarplattensubstraten ausgebildet sind, die mittels der Fügewalzen miteinander verbunden wurden. Die auf diese Art und Weise abgetrennten Bipolarplattenabschnitte können anschließend einer Nachbearbeitung wie beispielsweise einer Beschichtung unterzogen werden, so dass sie anschließend als fertige Bipolarplatte in einem Brennstoffzellenstapel Verwendung finden können.

Um zu verhindern, dass sich während des Verbindens der als Bandmaterialien bereitgestellten Bipolarplattensubstrate auf deren Oberflächen in unerwünschter Weise Oxide bilden können, kann es gemäß einer weiteren Ausführungsform vorgesehen sein, dass das Verbinden der Bandmaterialien unter Schutzgasatmosphäre durchgeführt wird. Gleichermaßen kann es dabei vorgesehen sein, dass auch das stromaufwärtige Erwärmen und/oder das stromabwärtige Erwärmen und/oder Kühlen der miteinander verbundenen Bipolarplattensubstrate unter Schutzgasatmosphäre durchgeführt werden/wird. Hierzu kann die Vorrichtung zum Verbinden der beiden Bipolarplattensubstrate zumindest teilweise in einem Gehäuse angeordnet sein, dessen Innenraum gegenüber der Umgebungsatmosphäre abgedichtet ist und das zumindest die Fügewalzen und vorzugsweise auch zumindest eine der Heizeinrichtungen aufnimmt.

Das in Rede stehende Gehäuse kann dabei Öffnungen für die Zu- und Abfuhr eines Schutzgases und/oder Schlitze zur Förderung der Bipolarplattensubstrate in das Gehäuse hinein und aus demselben heraus aufweisen. Vorzugsweise können diese Schlitze mit einer Dichtung versehen sein, die eine Leckage von Schutzgas aus dem Gehäuse heraus verhindern. Dadurch, dass die Bipolarplattensubstrate durch die in Rede stehenden Schlitze in das Gehäuse hinein und aus dem Gehäuse heraus gefördert werden können, kann das Gehäuse verhältnismäßig klein ausgebildet werden, so dass aufgrund des geringen Gehäusevolumens nur eine verhältnismäßig kleine Menge an Schutzgas benötigt wird.

Gemäß noch einer weiteren Ausführungsform kann die erfindungsgemäße Vorrichtung zum Verbinden zweier Bipolarplattensubstrate eine Geschwindigkeitsregelung umfassen, welche eingerichtet ist, um die Fügewalzen und die Trennwalzen antreibende Motoren so zu regeln, dass die Fügewalzen und die Trennwalzen mit derselben Umfangsgeschwindigkeit rotieren. Die miteinander zu verbindenden bzw. verbundenen Bipolarplattensubstrate können somit kontinuierlich von den Fügewalzen zu den Trennwalzen weitergefördert werden, was es zulässt, dass die miteinander zu verbindenden Bipolarplattensubstrate als Bandmaterial bereitgestellt und kontinuierlich weiterverarbeitet werden können.

Gemäß einem weiteren Aspekt der vorliegenden Erfindung werden ein Verfahren zur Verwendung bei der Herstellung von Bipolarplatten für Brennstoffzellen mit den Merkmalen des Anspruchs 17 sowie eine zur Ausführung des Verfahrens ausgebildete Vorrichtungsanordnung zur Verwendung bei der Herstellung von Bipolarplatten für Brennstoffzellen mit den Merkmalen des Anspruchs 37 bereitgestellt.

Sofern nachfolgend genauer auf das erfindungsgemäße Verfahren zur Verwendung bei der Herstellung von Bipolarplatten für Brennstoffzellen und auf die Vorrichtungsanordnung zur Verwendung bei der Herstellung von Bipolarplatten für Brennstoffzellen eingegangen wird, sei an dieser Stelle angemerkt, dass sich die Ausführungen zu dem erfindungsgemäßen Verfahren zur Verwendung bei der Herstellung von Bipolarplatten für Brennstoffzellen in entsprechender Weise auf die erfindungsgemäße Vorrichtungsanordnung zur Verwendung bei der Herstellung von Bipolarplatten für Brennstoffzellen übertragen lassen und umgekehrt.

Ferner sei an dieser Stelle vorausgeschickt, dass, obwohl das erfindungsgemäße Verfahren zur Verwendung bei der Herstellung von Bipolarplatten für Brennstoffzellen und die erfindungsgemäße Vorrichtungsanordnung zur Verwendung bei der Herstellung von Bipolarplatten für Brennstoffzellen hier im Kontext von Brennstoffzellenanwendungen beschrieben werden, das Verfahren und die Vorrichtungsanordnung gleichermaßen bei Elektrolyseanwendungen, beispielsweise bei der Chloralkali-Elektrolyse oder der Elektrolyse von Wasserstoff und Kohlendioxid sowie bei Redox-Flow-Batterien, zum Einsatz kommen kann.

Die erfindungsgemäße Vorrichtungsanordnung entspricht dabei gewissermaßen der Kombination zweier Vorrichtungen zum Ausbilden eines Strömungsfelds in einem Bipolarplattensubstrat, wie sie bereits zuvor beschrieben wurde, und einer stromabwärts davon befindlichen Vorrichtung zum Verbinden zweier Bipolarplattensubstrate, wie sie ebenfalls bereits zuvor beschrieben wurde. Die von den beiden Vorrichtungen zum Ausbilden eines Strömungsfelds ausgegebenen Bipolarplattensubstrate werden dabei kontinuierlich im Rahmen eines Endlosprozesses der stromabwärts davon befindlichen Vorrichtung zum Verbinden zweier Bipolarplattensubstrate zugeführt, welche die beiden Bipolarplattensubstrate dann kontinuierlich miteinander verbindet und gegebenenfalls anschließend davon einzelne Bipolarplattenabschnitte abtrennt.

Da für einen derartigen Endlosprozess die einzelnen Prozesswalzen hinsichtlich ihrer Fördergeschwindigkeit miteinander synchronisiert sein müssen, kann es gemäß einer weiteren Ausführungsform vorgesehen sein, dass die Vorrichtungsanordnung eine Geschwindigkeitsregelungseinrichtung umfasst, welche eingerichtet ist, um die Stanzwalzen, die Prägewalzen, die Fügewalzen und die Trennwalzen antreibende Motoren so zu regeln, dass die Stanzwalzen, die Prägewalzen, die Fügewalzen und die Trennwalzen mit jeweils derselben Umfangsgeschwindigkeit rotieren.

Gemäß einer weiteren Ausführungsform kann die Vorrichtungsanordnung zumindest teilweise in einem einzigen Gehäuse angeordnet sein, dessen Innenraum gegenüber der Umgebungsatmosphäre abgedichtet ist und das zumindest die Prägewalzen, die den Prägewalzen vorgeschaltete Heizeinrichtung, die Fügewalzen und die den Fügewalzen vor- und/oder nachgeschalteten Heizeinrichtungen aufnimmt. Mit anderen Worten werden also die Gehäuse der beiden Vorrichtungen zum Ausbilden eines Strömungsfelds in einem Bipolarplattensubstrat und das Gehäuse der Vorrichtung zum Verbinden zweier Bipolarplattensubstrate zu einem einzigen Gehäuse vereint.

Durch Anwendung des erfindungsgemäßen Verfahrens zur Verwendung bei der Herstellung von Bipolarplatten für Brennstoffzellen, welches unter Verwendung der erfindungsgemäßen Vorrichtungsanordnung ausgeführt werden kann, können somit in einem fortlaufenden Endlosverfahren Bipolarplatten mit hoher Präzision und hohen Taktzeiten unter gleichzeitiger Reduzierung der Ausschussrate hergestellt werden. Derartige Bipolarplatten können dann in einem Brennstoffzellenstapel in an sich herkömmlicher Art und Weise zum Einsatz kommen, um benachbarte Brennstoffzellen voneinander zu trennen.

Im Folgenden wird die Erfindung nun rein exemplarisch unter Bezugnahme auf die Figuren beschrieben, in denen:
- Fig. 1: eine perspektivische Darstellung einer exemplarischen Ausführungsform einer erfindungsgemäßen Vorrichtungsanordnung zeigt; und
- Fig. 2: eine Ansicht der Vorrichtungsanordnung gemäß Fig. 1 zeigt.

Die erfindungsgemäße Vorrichtungsanordnung 10 dient zur Herstellung von Bipolarplatten für Brennstoffzellen unter Verwendung eines Endlosprozesses, bei dem zunächst in zwei als Bandmaterial bzw. als Endlosbandmaterial vorliegende Brennstoffzellensubstrate beiderseits Strömungsfelder eingewalzt werden, wobei anschließend die beiden so vorbereiteten Bipolarplattensubstrate zusammengefügt werden, um davon einzelne Bipolarplattenabschnitte trennen zu können.

Die erfindungsgemäße Vorrichtungsanordnung 10 lässt setzt hierzu aus zwei Vorrichtungen 40 bzw. 41 zum Ausbilden eines Strömungsfelds in jeweils einem Bipolarplattensubstrat 34 bzw. 36 und einer stromabwärts dieser beiden Vorrichtungen 40, 41 angeordneten Vorrichtung 42 zum Verbinden der beiden Bipolarplattensubstrate 34, 36 zusammen.

Die beiden Vorrichtungen 40, 41 zum Ausbilden eines Strömungsfelds in einem Bipolarplattensubstrat 34, 36 sind im Wesentlichen identisch ausgebildet, weshalb nachfolgend nur auf die Ausgestaltung der ersten Vorrichtung 40 genauer eingegangen wird.

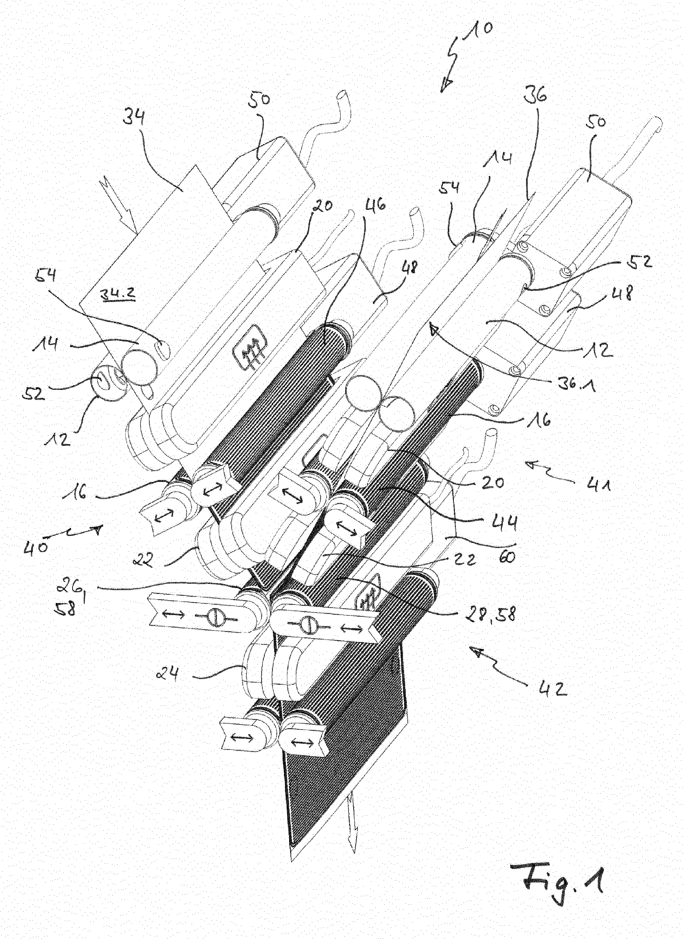

Die erste Vorrichtung 40 weist eine erste Prägewalze 16 und eine zweite Prägewalze 18 auf, wobei zwischen diesen beiden Prägewalzen 16, 18 ein Prägewalzenspalt ausgebildet ist. Den beiden Prägewalzen 16, 18 wird dabei ein als erstes Bandmaterial vorliegendes Bipolarplattensubstrat 34 entsprechend dem in Fig. 1 dargestellten Pfeil zugeführt. Die der ersten Prägewalze 16 zugewandte Seite des ersten Bipolarplattensubstrats 34 wird dabei als erste Seite 34.1 bzw. als Außenseite 34.1 und die der zweiten Prägewalze 18 zugewandte Seite des ersten Bipolarplattensubstrats 34 wird dabei als zweite Seite 34.2 bzw. als Innenseite 34.2 bezeichnet.

Die erste Prägewalze 16 weist an ihrer Umfangsfläche eine erste Prägestruktur 44 in Form einer Vielzahl von Stegen auf, wobei diese erste Prägestruktur 44 komplementär zu einem in die erste Seite 34.1 des Bipolarplattensubstrats 34 einzuprägenden ersten Strömungsfelds ausgebildet ist. Gleichermaßen ist an der Umfangsfläche der zweiten Prägewalze 18 eine zweite Prägestruktur 46 in Form einer Vielzahl von Stegen ausgebildet, wobei diese zweite Prägestruktur 46 komplementär zu einem in die zweite Seite 34.2 des ersten Bipolarplattensubstrats 34 einzuprägenden zweiten Strömungsfelds ausgebildet ist.

Angetrieben werden die beiden Prägewalzen 16, 18 von einem einzigen Prägewalzenmotor 48 in Form eines Elektromotors, wobei die beiden Prägewalzen 16, 18 über ein Getriebe derart antriebswirksam miteinander verbunden sind, dass sie zur Förderung des ersten Bipolarplattensubstrats 34 gegensinnig rotieren.

Wird somit den beiden Prägewalzen 16, 18 ein als erstes Bandmaterial vorliegendes erstes Bipolarplattensubstrat 34 kontinuierlich zugeführt, so wird dieses aufgrund der gegensinnigen Drehbewegung der beiden Prägewalzen 16, 18 kontinuierlich durch den Prägespalt gefördert, wobei in dem Prägespalt durch die erste Prägewalze 16 in die erste Seite bzw. in die Außenseite 34.1 des ersten Bipolarplattensubstrats 34 ein als Reaktandengasströmungsfeld dienendes Strömungsfeld eingewalzt wird. Demgegenüber wird mittels der zweiten Prägewalze 18 in die zweite Seite bzw. in die Innenseite 34.2 des ersten Bipolarplattensubstrats 34 ein als Kühlmittelströmungsfeld dienendes zweites Strömungsfeld eingewalzt.

Damit mit der erfindungsgemäßen Vorrichtungsanordnung 10 und insbesondere mit den beiden Vorrichtungen 40, 41 unterschiedlich dicke Bipolarplattensubstrate verarbeitet werden können, kann die Größe des Prägewalzenspalts verändert werden, wie dies in der Fig. 1 durch die beiden Doppelpfeile kenntlich gemacht ist.

Um dem Bipolarplattensubstrat 34 bzw. 36 die für das Prägen erforderliche Duktilität zu verleihen, weist die Vorrichtungsanordnung 10 und insbesondere jede der beiden Vorrichtungen 40, 41 stromaufwärts der beiden Prägewalzen 16, 18 eine erste Heizeinrichtung 20 auf, mittels derer das jeweilige Bipolarplattensubstrat 34, 36 auf eine für das Einwalzen der Strömungsfelder geeignete Prozesstemperatur erwärmt werden kann. Vorzugsweise ist dabei eine hier nicht dargestellte Temperaturregeleinrichtung vorgesehen, mittels derer die Temperatur der ersten Heizeinrichtung 20 auf die gewünschte Prozesstemperatur eingeregelt werden kann. Die erste Heizeinrichtung 20 kann dabei als Wärmequelle mehrere Laserdioden, zumindest eine Induktionsspule und/oder zumindest einen Heizstab umfassen.

In entsprechender Weise verfügen die beiden Vorrichtungen 40, 41 stromabwärts der jeweiligen Prägewalzen 16, 18 jeweils über eine zweite Heizeinrichtung 22, mit der die Temperatur des jeweiligen Bipolarplattensubstrats 34, 36 auf eine Temperatur eingeregelt werden kann, welche sich für das nachfolgende thermische Verbinden der beiden Bipolarplattensubstrate 34, 36 eignet.

Des Weiteren verfügt die Vorrichtungsanordnung 10 und insbesondere jede der beiden Vorrichtungen 40, 41 stromaufwärts der beiden Prägewalzen 16, 18 sowie stromaufwärts der ersten Heizeinrichtung 20 über eine Stanzeinrichtung in Form zweier Stanzwalzen 12, 14, welche von einem Stanzwalzenmotor 50 angetrieben werden. Wie die beiden Prägewalzen 16, 18 sind auch die beiden Stanzwalzen 12, 14 derart antriebswirksam über ein Getriebe miteinander verbunden, dass sie von dem Stanzwalzenmotor 50 gegensinnig angetrieben werden.

Wie der Fig. 1 entnommen werden kann, weist die erste Stanzwalze 12 an einem Ende eine Stanzöffnung 52 auf, wohingegen die zweite Stanzwalze 40 einen entsprechenden Stanzstempel 54 aufweist. Wird daher das jeweilige Bipolarplattensubstrat 34, 36 aufgrund einer gegensinnigen Drehung der beiden Stanzwalzen 12, 14 durch deren Stanzwalzenspalt gefördert, so werden hierbei entsprechende Öffnungen in das jeweilige Bipolarplattensubstrat 34, 36 eingestanzt, welche zur Medienzufuhr zu dem jeweiligen Strömungsfeld bzw. zur Medienabfuhr aus dem jeweiligen Strömungsfeld benötigt werden.

Um das jeweilige Bipolarplattensubstrat 34 bzw. 36 kontinuierlich und fortlaufend bearbeiten zu können, müssen die Stanzwalzen 12, 14 mit den Prägewalzen 16, 18 synchronisiert werden. Hierzu ist eine Geschwindigkeitsregeleinrichtung 56 vorgesehen, welche derart eingerichtet ist, um die die Stanzwalzen 12, 14 und die Prägewalzen 16, 18 antreibende Motoren 48, 50 so zu regeln, dass sich die Stanzwalzen 12, 14 und die Prägewalzen 16, 18 mit derselben Umfangsgeschwindigkeit drehen.

Wie bereits zuvor ausgeführt wurde, sind die beiden Vorrichtungen 40, 41 im Wesentlichen identisch ausgebildet. Mittels der ersten Prägewalze 16 der zweiten Vorrichtung 41 kann somit in entsprechender Weise in die erste Seite 36.1 bzw. in die Außenseite 36.1 des zweiten Bipolarplattensubstrats 36 eine als Reaktandengasströmungsfeld dienende Kanalstruktur eingewalzt werden, wohingegen mit der zweiten Prägewalze 18 der zweiten Vorrichtung 41 in die zweite Seite 36.2 bzw. in die Innenseite 36.2 des zweiten Bipolarplattensubstrats 36 ein als Kühlmittelströmungsfeld dienendes Strömungsfeld eingewalzt werden kann.

Nachdem die beiden als Bandmaterial vorliegenden Bipolarplattensubstrate 34, 36 die jeweilige Vorrichtung 40, 41 durchlaufen haben, weisen diese auf ihren beiden Seiten 34.1, 34.2 bzw. 36.1, 36.2 somit jeweils ein eingewalztes Strömungsfeld auf. Die so vorbereiteten Bipolarplattensubstrate 34, 36 können dann anschließend in der in den Vorrichtungen 40, 41 nachgeordneten Vorrichtung 42 miteinander verbunden und insbesondere miteinander verschweißt werden, worauf im Folgenden genauer eingegangen wird.

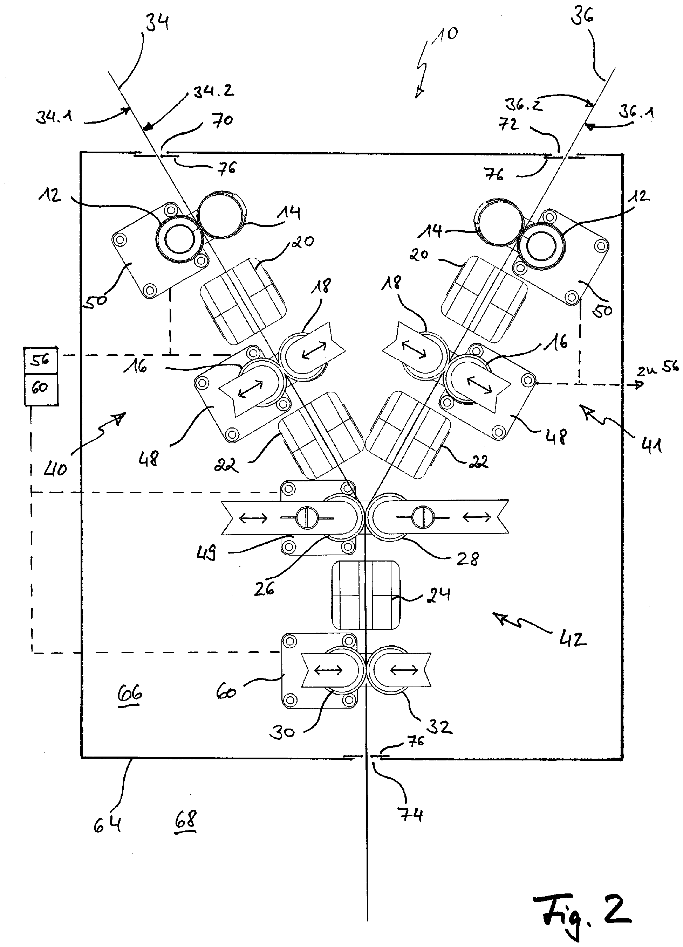

Wie wiederum der Fig. 1 entnommen werden kann, weist die Vorrichtung 42 zum Verbinden der beiden Bipolarplattensubstrate 34, 36 zwei Fügewalzen 26, 28 auf, zwischen denen ein Fügewalzenspalt zur Aufnahme und zum Zusammenpressen der beiden miteinander zu verbindenden Bipolarplattensubstrate 34, 36 ausgebildet ist. Die beiden Vorrichtungen 40, 41, die der Vorrichtung 42 vorgeschaltet sind, sind dabei derart bezüglich der Vorrichtung 42 ausgerichtet, dass die beiden Bandmaterialien 34, 36 spitzwinklig zueinander in den Fügewalzenspalt zusammenlaufen, siehe hierzu insbesondere die Fig. 2. Genauer verlaufen dabei die beiden Bandmaterialien 34, 36 stromaufwärts des Fügewalzenspalts symmetrisch bezüglich einer Ebene, die durch den Fügewalzenspalt verläuft und dabei tangential sowohl bezüglich der ersten Fügewalze 26 als auch der zweiten Fügewalze 28 ausgerichtet ist.

Angetrieben werden die beiden Fügewalzen 26, 28 von einem einzigen Fügewalzenmotor 49 in Form eines Elektromotors, wobei die beiden Fügewalzen 26, 28 über ein Getriebe derart antriebswirksam miteinander verbunden sind, dass sie zur Förderung des beiden Bipolarplattensubstrats 34, 36 gegensinnig rotieren.

Die beiden Fügewalzen 26, 28 weisen an ihrer jeweiligen Umfangsfläche jeweils eine Fügestruktur 58 auf, wobei diese Fügestrukturen 58 im Wesentlichen den Prägestrukturen 44 der beiden ersten Prägewalzen 26 entsprechen, mittels derer in die Außenflächen 34.1 bzw. 36.1 der beiden Bipolarplattensubstrate 34 bzw. 36 zuvor Reaktandengasströmungsfelder eingewalzt wurden. Die Fügestrukturen 58 der beiden Fügewalzen 26, 28 greifen somit wie die Prägestrukturen 44 der beiden ersten Prägewalzen 16 in die jeweiligen Reaktandengasströmungsfelder ein, ohne diese zu verformen, wenn die beiden Bipolarplattensubstrate 34, 36 mittels der beiden Fügewalzen 26, 28 aneinandergepresst werden, um sie miteinander zu verbinden.

Um die beiden Bipolarplattensubstrate 34, 36 mittels der beiden Fügewalzen 26, 28 zusammenpressen zu können, können die beiden Fügewalzen 26, 28 mittels federelastischer Mittel aufeinander zu vorgespannt sein. Darüber hinaus kann die Größe des Fügewalzenspalts wie die Größe des zuvor beschriebenen Prägewalzenspalts zur Anpassung an unterschiedliche dicke Bipolarplattensubstrate eingestellt werden, wie dies in den Fig. 1 und 2 durch den jeweiligen Doppelpfeil kenntlich gemacht ist.

Bei der hier dargestellten Vorrichtungsanordnung 10 bzw. bei deren Vorrichtung 42 erfolgt das Verbinden der beiden Bipolarplattensubstrate 34, 36, indem die beiden Bipolarplattensubstrate 34, 36 mittels der beiden Fügewalzen 26, 28 miteinander verschweißt werden. Hierzu können die Fügestrukturen 58, die entlang der Umfangsfläche der beiden Fügewalzen 26, 28 ausgebildet sind, eine oder mehrere Schweißelektroden zum Widerstandsschweißen und/oder eine oder mehrere Schweißsonotroden zum Ultraschallschweißen aufweisen. Werden somit die Schweißelektroden bzw. die Schweißsonotroden bestromt bzw. zu hochfrequenten Schwingungen angeregt, so werden die beiden Bipolarplattensubstrate 34, 36 in dem Fügewalzenspalt durch Widerstandsschweißen und/oder durch Ultraschallschweißen miteinander verbunden, während sie mittels der beiden Fügewalzen 26, 28 aneinander gepresst werden.

Nachdem die beiden Bipolarplattensubstrate 34, 36 in der zuvor beschriebenen Art und Weise unter Verwendung der beiden Fügewalzen 26, 28 miteinander verbunden wurden, können die beiden miteinander verbundenen Bipolarplattensubstrate 34, 36 mittels einer nachgeschalteten dritten Heizeinrichtung 34 gezielt gekühlt oder erwärmt werden, um so beispielsweise der Entstehung ungewünschter Materialspannungen und Verzüge entgegenzuwirken.

Darüber hinaus verfügt die Vorrichtung 42 über eine der dritten Heizeinrichtung 24 nachgeschaltete Trenneinrichtung in Form zweier Trennwalzen 30, 32, mit Hilfe derer einzelne Bipolarplattenabschnitte von den beiden miteinander verbundenen Bipolarplattensubstraten 34, 36 abgetrennt werden können. Angetrieben werden die beiden Trennwalzen 30, 32 von einem Trennwalzenmotor 60 in Form eines Elektromotors, wobei die beiden Trennwalzen 30, 32 derart antriebswirksam über ein Getriebe miteinander verbunden sind, dass sie stets gegensinnig rotieren. Zur Abtrennung einzelner Bipolarplattenabschnitte von den beiden miteinander verbundenen Bipolarplattensubstraten 34, 38 kann eine der beiden Trennwalzen 30 eine Schneidkante (nicht dargestellt) aufweisen, welche in eine komplementär dazu ausgebildete Schneidkerbe (ebenfalls nicht dargestellt) aufweist, die an der anderen Trennwalze 32 ausgebildet ist.

Um die Bipolarplattensubstrate 34, 36 fortlaufend und kontinuierlich durch die zweite Vorrichtung 42 fördern zu können, müssen die Geschwindigkeiten der Fügewalzen 26, 28 und der Trennwalzen 30, 32 aufeinander abgestimmt und miteinander synchronisiert werden, wozu eine zweite Geschwindigkeitsregeleinrichtung 62 vorgesehen sein kann, welche derart eingerichtet ist, um die die Fügewalzen 26, 28 und die Trennwalzen 30, 32 antreibende Motoren 49, 60 so zu regeln, dass die Fügewalzen 26, 28 und die Trennwalzen 30, 32 mit derselben Umfangsgeschwindigkeit rotieren. Insbesondere können dabei die beiden Geschwindigkeitsregeleinrichtungen 56, 62 zu einer einzigen Geschwindigkeitsregeleinrichtung zusammengefasst sein, welche derart eingerichtet ist, dass die Stanzwalzen 12, 14, die Prägewalzen 16, 18, die Fügewalzen 26, 28 und die Trennwalzen 30, 32 der Vorrichtungsanordnung 10 mit ein und derselben Umfangsgeschwindigkeit rotieren. Auf diese Art und Weise kann sichergestellt werden, dass die als Bandmaterial vorliegenden Bipolarplattensubstrate 34, 36 kontinuierlich durch die einzelnen Walzen der erfindungsgemäßen Vorrichtungsanordnung 10 transportiert und gefördert werden, ohne dass es an irgendeiner Stelle innerhalb der Vorrichtung zu einem Stau des jeweiligen Bandmaterials 34, 36 kommt.

Wie der Fig. 2 entnommen werden kann, kann die erfindungsgemäße Vorrichtungsanordnung 10 in einem einzigen Gehäuse 64 angeordnet sein, dessen Innenraum 66 gegenüber der Umgebungsatmosphäre 68 abgedichtet ist. Wie der Fig. 2 des Weiteren entnommen werden kann, verfügt das Gehäuse 64 über zwei Schlitze 70, 72, durch die das jeweilige Bandmaterial 34, 36 kontinuierlich von außen zugeführt werden kann. Gleichermaßen verfügt das Gehäuse 64 über einen dritten Schlitz 74, durch den die beiden in der zuvor beschriebenen Art und Weise miteinander verbundenen Bipolarplattensubstrate 34, 36 aus dem Gehäuse 64 wieder herausgefördert werden kann.

Das Gehäuse 64 dient dabei zur Aufnahme eines Schutzgases, durch das verhindert werden kann, dass sich an der Oberfläche der beiden Bipolarplattensubstrate 34, 36 während deren Verarbeitung unter Verwendung der erfindungsgemäßen Vorrichtung 10 in unerwünschter Weise Oxide bilden können. Um zu verhindern, dass das in dem Gehäuse 64 befindliche Schutzgas durch die Schlitze 70, 72, 74 in unerwünschter Weise entwichen kann, sind entlang der in Rede stehenden Schlitze 70, 72, 74 hier nur schematisch dargestellt Dichtlippen 76 vorgesehen, durch die der jeweilige Schlitz 70, 72, 72 gegenüber dem jeweiligen Bipolarplattensubstrat 34 und/oder 36 abgedichtet wird.

Mittels der erfindungsgemäßen Vorrichtungsanordnung 10 lassen sich somit in einem Endlosverfahren Strömungsfelder in zwei als Bandmaterial vorliegende Bipolarplattensubstrate 34, 36 einbringen, woraufhin die beiden Bipolarplattensubstrate 34, 36 unmittelbar im Anschluss miteinander verschweißt werden können.

Da die beiden als Bandmaterial vorliegenden Bipolarplattensubstrate 34, 36 dem Fügewalzenpaar 26, 28 kontinuierlich zugeführt werden, bedarf es anders als bei herkömmlichen Verbindungstechniken keiner aufwendiger Ausrichtvorgänge einzelner miteinander zu verbindender Bipolarhalbplatten. Vielmehr kann durch die Synchronisierung der Transportgeschwindigkeiten der beiden Bandmaterialien 34, 36 sichergestellt werden, dass die beiden mit Strömungsfeldern versehenen Bipolarplattensubstrate 34,36 genau so zusammengefügt werden, dass sich einander zugehörige Strömungsfelder nach dem Fügevorgang miteinander in Deckung befinden. Auf diese Art und Weise können hohe Taktzeiten mit einem Ausstoß von etwa einem Bipolarplattenabschnitt pro Sekunde erreicht werden. In wirtschaftlicher Hinsicht erweist sich die Erfindung dann insbesondere als vorteilhaft, wenn ca. 50 oder mehr der erfindungsgemäßen Vorrichtungsanordnungen parallel betrieben werden. In diesem Falle können pro Sekunde etwa 5o Bipolarplattenabschnitte erzeugt werden, womit sich eine derartige Fertigungsanlage kostendeckend betreiben lässt.

### Bezugszeichenliste

- 10: Vorrichtungsanordnung
- 12: erste Stanzwalze
- 14: zweite Stanzwalze
- 16: erste Prägewalze
- 18: zweite Prägewalze
- 20: erste Heizeinrichtung
- 22: zweite Heizeinrichtung
- 24: dritte Heizeinrichtung
- 26: erste Fügewalze
- 28: zweite Fügewalze
- 30: erste Trennwalze
- 32: zweite Trennwalze
- 34: erstes Bipolarplattensubstrat/erstes Bandmaterial
- 34.1: erste Seite/Außenseite
- 34.2: zweite Seite/Innenseite
- 36: zweites Bipolarplattensubstrat/zweites Bandmaterial
- 36.1: erste Seite/Außenseite
- 36.2: zweite Seite/Innenseite
- 40: erste Vorrichtung zum Ausbilden eines Strömungsfelds in einem Bipolarplattensubstrat
- 41: zweite Vorrichtung zum Ausbilden eines Strömungsfelds in einem Bipolarplattensubstrat
- 42: Vorrichtung zum Verbinden zweier Bipolarplattensubstrate
- 44: erste Prägestruktur
- 46: zweite Prägestruktur
- 48: Prägewalzenmotor
- 49: Fügewalzenmotor
- 50: Stanzwalzenmotor
- 52: Stanzöffnung
- 54: Stanzstempel
- 56: erste Geschwindigkeitsregeleinrichtung
- 58: Fügewalzenstruktur
- 60: Trennwalzenmotor
- 62: zweite Geschwindigkeitsregeleinrichtung
- 64: Gehäuse
- 66: Innenraum
- 68: Umgebungsatmosphäre
- 70: Schlitz
- 72: Schlitz
- 74: Schlitz
- 76: Dichtlippe

## Patentansprüche

1. Verfahren zum Ausbilden eines Strömungsfelds in einem Bipolarplattensubstrat (34, 36), umfassend:
- Bereitstellen eines Bipolarplattensubstrats (34, 36) als Bandmaterial, das eine erste Seite (34.1, 36.1) und eine der ersten Seite gegenüberliegende zweite Seite (34.2, 36.2) aufweist;
- Fördern des Bandmaterials; und
- Einwalzen einer ersten Kanalstruktur mit einer Vielzahl erster Vertiefungen und erster Erhebungen in zumindest die erste Seite (34.1, 36.1) des Bandmaterials während des Förderns des Bandmaterials zur Bildung eines ersten Strömungsfelds.

2. Verfahren nach Anspruch 1,
**dadurch gekennzeichnet,**
**dass** während des Einwalzens des ersten Strömungsfelds in die erste Seite (34.1, 36.1) des Bandmaterials eine zweite Kanalstruktur mit einer Vielzahl zweiter Vertiefungen und zweiter Erhebungen in die zweite Seite (34.2, 36.2) des Bandmaterials zur Bildung eines zweiten Strömungsfelds eingewalzt wird;
wobei es insbesondere vorgesehen ist, dass zumindest einige der zweiten Vertiefungen jeweils einer ersten Erhebung und zumindest einige der ersten Vertiefungen jeweils einer zweiten Erhebung entsprechen.

3. Verfahren nach Anspruch 1 oder 2,
**dadurch gekennzeichnet,**
**dass** das Bandmaterial stromaufwärts und/oder stromabwärts der Stelle, an der das erste Strömungsfeld und/oder das zweite Strömungsfeld in das Bandmaterial eingewalzt werden/wird, während des Förderns temperiert wird, wobei es insbesondere vorgesehen ist, dass die Temperatur, auf die das Bandmaterial erwärmt wird, auf eine vorgegebene Prozesstemperatur für das Einwalzen der Kanalstrukturen eingeregelt wird;
und/oder
**dass** das Einwalzen der ersten Kanalstruktur und/oder der zweiten Kanalstruktur in das Bandmaterial sowie das Erwärmen desselben unter Schutzgasatmosphäre durchgeführt wird;
und/oder
**dass** in das Bandmaterial stromaufwärts der Stelle, an der die erste Kanalstruktur und/oder die zweite Kanalstruktur in das Bandmaterial eingewalzt werden/wird, und insbesondere stromaufwärts der Stelle, an der das Bandmaterial erwärmt wird, zumindest eine Öffnung für die Medienzufuhr zu der jeweiligen Kanalstruktur und/oder für die Medienabfuhr aus der jeweiligen Kanalstruktur während des Förderns eingestanzt wird.

4. Verfahren zum Verbinden zweier Bipolarplattensubstrate (34, 36), umfassend:
- Bereitstellen eines ersten Bipolarplattensubstrats (34) als ein erstes Bandmaterial, das eine erste Seite (34.1), in der ein erstes Strömungsfeld in Form einer ersten Kanalstruktur ausgebildet ist, und eine der ersten Seite (34.1) gegenüberliegende zweite Seite (34.2) aufweist, in der ein zweites Strömungsfeld in Form einer zweiten Kanalstruktur ausgebildet ist;
- Bereitstellen eines zweiten Bipolarplattensubstrats (36) als zweites Bandmaterial, das eine erste Seite (36.1), in der ein erstes Strömungsfeld in Form einer ersten Kanalstruktur ausgebildet ist, und eine der ersten Seite (36.1) gegenüberliegende zweite Seite (36.2) aufweist, in der ein zweites Strömungsfeld in Form einer zweiten Kanalstruktur ausgebildet ist;
- Fördern der beiden Bandmaterialien mit derselben Geschwindigkeit;
- In Anlage Bringen der zweiten Seite (34.2) des ersten Bandmaterials mit der zweiten Seite (36.2) des zweiten Bandmaterials während des Förderns der beiden Bandmaterialien; und
- Verbinden der zweiten Seite (34.2) des ersten Bandmaterials mit der zweiten Seite (36.2) des zweiten Bandmaterials während des Förderns der beiden Bandmaterialien.

5. Verfahren nach Anspruch 4,
**dadurch gekennzeichnet,**
**dass** die Bandmaterialien des ersten und des zweiten Bipolarplattensubstrats (34, 36), bevor sie miteinander in Anlage gebracht werden, relativ zueinander so ausgerichtet werden, dass sich das zweite Strömungsfeld des ersten Bandmaterials und das zweite Strömungsfeld des zweiten Bandmaterials in Deckung befinden;
und/oder
**dass** die zweite Seite (34.2) des ersten Bandmaterials mit der zweiten Seite (36.2) des zweiten Bandmaterials durch ein thermisches Verfahren verbunden wird, wobei insbesondere die zweite Seite (34.2) des ersten Bandmaterials mit der zweiten Seite (36.2) des zweiten Bandmaterials verschweißt wird, und zwar insbesondere mittels Rollennahtschweißen, bevorzugt durch Widerstandsrollennahtschweißen;
und/oder
**dass** Erhebungen des zweiten Strömungsfelds des ersten Bandmaterials mit den Erhebungen des zweiten Strömungsfelds des zweiten Bandmaterials verschweißt werden, und zwar vorzugsweise punktuell; und/oder dass Erhebungen des zweiten Strömungsfelds des ersten Bandmaterials mit den Vertiefungen des zweiten Strömungsfelds des zweiten Bandmaterials verschweißt werden, und zwar vorzugsweise punktuell; und/oder dass die beiden Bandmaterialien entlang eines die ersten und zweiten Strömungsfelder umgebenden Umfangs miteinander verschweißt werden, und zwar vorzugsweise kontinuierlich;
und/oder
**dass** die zweite Seite (34.2) des ersten Bandmaterials während des Verbindens gegen die zweite Seite (36.2) des zweiten Bandmaterials gepresst wird;
und/oder
**dass** das erste Bandmaterial und/oder das zweite Bandmaterial stromaufwärts der Stelle, an der die zweiten Seiten (34.2, 36.2) der beiden Bandmaterialien miteinander verbunden werden, während des Förderns kontinuierlich erwärmt werden, wobei es insbesondere vorgesehen ist, dass die Temperatur, auf die das Bandmaterial erwärmt wird, auf eine vorgegebene Prozesstemperatur zur Vorbereitung eines thermischen Verbindens, insbesondere eines Verbindens durch Schweißen, eingeregelt wird;
und/oder
**dass** das erste Bandmaterial und/oder das zweite Bandmaterial stromabwärts der Stelle, an der die zweite Seiten (34.2, 36.2) der beiden Bandmaterialien miteinander verbunden werden, während des Förderns kontinuierlich erwärmt oder gekühlt werden;
wobei es insbesondere vorgesehen ist, dass die Temperatur, auf die das Bandmaterial erwärmt oder gekühlt wird, auf eine vorgegebene Prozesstemperatur zur Minderung von inneren Materialspannungen eingeregelt wird;
und/oder
**dass** von den miteinander verbundenen Bandmaterialien während des Förderns sukzessive einzelne Bipolarplattenabschnitte abgetrennt werden, und zwar insbesondere nachdem die miteinander verbundenen Bandmaterialien erwärmt oder gekühlt wurden;
und/oder
**dass** das Verbinden der Bandmaterialien unter Schutzgasatmosphäre durchgeführt wird, wobei es vorzugsweise vorgesehen ist, dass auch das stromaufwärtige Erwärmen und/oder das stromabwärtige Erwärmen und/oder Kühlen unter Schutzgasatmosphäre durchgeführt werden;
und/oder
**dass** das erste und das zweite Strömungsfeld in dem Bandmaterial sowohl des ersten als auch des zweiten Bipolarplattensubstrats (34, 36) mittels des Verfahrens nach einem der Ansprüche 2 und 3 ausgebildet werden.

6. Verfahren zur Verwendung bei der Herstellung von Bipolarplatten, insbesondere für Brennstoffzellen, umfassend:
- Bereitstellen eines ersten Bipolarplattensubstrats (34) als ein erstes Bandmaterial, das eine erste Seite (34.1) und eine der ersten Seite (34.1) gegenüberliegende zweite Seite (34.2) aufweist;
- Bereitstellen eines zweiten Bipolarplattensubstrats (36) als ein zweites Bandmaterial, das eine erste Seite (36.1) und eine der ersten Seite (36.1) gegenüberliegende zweite Seite (36.2) aufweist;
- Fördern der beiden Bandmaterialien mit einer vorbestimmten Geschwindigkeit;
- Erzeugen, insbesondere Einprägen, einer ersten Kanalstruktur mit einer Vielzahl erster Vertiefungen und erster Erhebungen in sowohl die erste Seite (34.1) des ersten Bandmaterials als auch in die erste Seite (36.1) des zweiten Bandmaterials zur Bildung eines jeweiligen ersten Strömungsfelds;
- Erzeugen, insbesondere Einprägen, einer zweiten Kanalstruktur mit einer Vielzahl zweiter Vertiefungen und zweiter Erhebungen in sowohl die zweite Seite (34.2) des ersten Bandmaterials als auch in die zweite Seite (36.2) des zweiten Bandmaterials zur Bildung eines jeweiligen zweiten Strömungsfelds;
- Weiterfördern der mit den ersten und zweiten Kanalstrukturen versehenen Bandmaterialien mit der vorbestimmten Geschwindigkeit;
- In Anlage Bringen der zweiten Seite (34.2) des ersten Bandmaterials mit der zweiten Seite (36.2) des zweiten Bandmaterials während des Weiterförderns der beiden Bandmaterialien; und
- Verbinden der zweiten Seite (34.2) des ersten Bandmaterials mit der zweiten Seite (36.2) des zweiten Bandmaterials während des Weiterförderns der beiden Bandmaterialien;
wobei es insbesondere vorgesehen ist, dass:
die jeweiligen Kanalstrukturen eingewalzt werden, insbesondere durch Rollprägen oder Wälzprägen; und/oder
das Verfahren ferner Schritte nach zumindest einem der Ansprüche 2 und 4 aufweist; und/oder dass
das Verfahren ferner Schritte gemäß Anspruch 5 aufweist.

7. Vorrichtung (40, 41) zum Ausbilden eines Strömungsfelds in einem Bipolarplattensubstrat (34, 36), mit zwei gegensinnig rotierenden Prägewalzen (16, 18), zwischen denen ein Prägewalzenspalt zur Aufnahme eines zu prägenden Bipolarplattensubstrats (34, 36) ausgebildet ist, das eine erste Seite (34.1, 36.1) und eine der ersten Seite (34.1, 36.1) gegenüberliegende zweite Seite (34.2, 36.2) aufweist, wobei eine erste der beiden Prägewalzen (18) auf ihrer Umfangsfläche zumindest eine erste Prägestruktur (44) aufweist, die komplementär zu einem in die erste Seite (34.1, 36.1) des Bipolarplattensubstrats (34, 36) einzuprägenden ersten Strömungsfelds im Form einer ersten Kanalstruktur mit einer Vielzahl erster Vertiefungen und erster Erhebungen ausgebildet ist.

8. Vorrichtung nach Anspruch 7,
**dadurch gekennzeichnet,**
**dass** eine zweite der beiden Prägewalzen (18) auf ihrer Umfangsfläche zumindest eine zweite Prägestruktur (46) aufweist, die komplementär zu einem in die zweite Seite (34.2, 36.2) des Bipolarplattensubstrats (34, 36) einzuprägenden zweiten Strömungsfelds im Form einer zweiten Kanalstruktur mit einer Vielzahl zweiter Vertiefungen und zweiter Erhebungen ausgebildet ist;
wobei es insbesondere vorgesehen ist, dass:
die Größe des Prägewalzenspalts zur Anpassung an unterschiedlich dicke Bipolarplattensubstrate (34, 36) einstellbar ist, wozu es insbesondere vorgesehen ist, dass die Position der ersten Prägewalze (16) und/oder die Position der zweiten Prägewalze (18) veränderbar ist;
und/oder
**dass** die Vorrichtung (40, 41) stromaufwärts und/oder stromabwärts der beiden Prägewalzen (16, 18) eine Heizeinrichtung (20, 21) zum Erwärmen des Bipolarplattensubstrats (34, 36) vor und/oder nach dem Durchlaufen des Prägewalzenspalts aufweist, wobei es insbesondere vorgesehen ist, dass die Heizeinrichtung (20, 21) als Wärmequelle mehrere Laserdioden, zumindest eine Induktionsspule und/oder zumindest einen Heizstab umfasst;
wobei es insbesondere vorgesehen ist, dass eine Temperaturregeleinrichtung vorgesehen ist, welche zur Regelung der Temperatur der jeweiligen Heizeinrichtung (20, 21) auf eine vorgegebene Prozesstemperatur für das Einwalzen der Kanalstrukturen eingerichtet ist.

9. Vorrichtung nach zumindest einem der Ansprüche 7 und 8,
**dadurch gekennzeichnet,**
**dass** die Vorrichtung (40, 41) stromaufwärts der beiden Prägewalzen (16, 18) und insbesondere auch stromaufwärts der Heizeinrichtung (20) eine Stanzeinrichtung aufweist, die zur Erzeugung zumindest einer Öffnung in dem Bipolarplattensubstrat (34, 36) für die Medienzufuhr zu der jeweiligen Kanalstruktur und/oder für die Medienabfuhr aus der jeweiligen Kanalstruktur eingerichtet ist;
wobei es insbesondere vorgesehen ist, dass die Stanzeinrichtung zwei gegensinnig rotierenden Stanzwalzen (12, 14) umfasst, zwischen denen ein Stanzwalzenspalt zur Aufnahme eines zu stanzenden und nachfolgend zu prägenden Bipolarplattensubstrats (34, 36) ausgebildet ist;
wobei es ferner insbesondere vorgesehen ist, dass die Größe des Stanzwalzenspalts zur Anpassung an unterschiedlich dicke Bipolarplattensubstrate (34, 36) einstellbar ist, wozu es insbesondere vorgesehen ist, dass die Position der einen Stanzwalze (12) und/oder die Position der anderen Stanzwalze (14) veränderbar ist;
wobei es darüber hinaus insbesondere vorgesehen ist, dass die Vorrichtung (40, 41) optional eine Geschwindigkeitsregeleinrichtung (56) umfasst, welche eingerichtet ist, um die Stanzwalzen (12, 14) und die Prägewalzen (16, 18) antreibende Motoren (50, 48) so zu regeln, dass die Stanzwalzen (12, 14) und die Prägewalzen (16, 18) mit derselben Umfangsgeschwindigkeit rotieren;
und/oder
**dass** die Vorrichtung (40, 41) zumindest teilweise in einem Gehäuse (64) angeordnet ist, dessen Innenraum (66) gegenüber der Umgebungsatmosphäre (68) abgedichtet ist und das zumindest die Prägewalzen (16, 18) und vorzugsweise auch die Heizeinrichtung (20, 21) aufnimmt;
wobei es insbesondere vorgesehen ist, dass das Gehäuse (64) Öffnungen für die Zu- und Abfuhr eines Schutzgases und/oder Schlitze (70, 72, 74) zur Förderung eines Bipolarplattensubstrat (34, 36) in das Gehäuse (64) hinein und aus demselben heraus aufweist.

10. Vorrichtung (42) zum Verbinden eines ersten Bipolarplattensubstrats (34), das eine erste Seite (34.1), in der ein erstes Strömungsfeld ausgebildet ist, und eine der ersten Seite (34.1) gegenüberliegende zweite Seite (34.2) aufweist, in der ein zweites Strömungsfeld ausgebildet ist, mit einem zweiten Bipolarplattensubstrat (36), das eine erste Seite (36.1), in der ein erstes Strömungsfeld ausgebildet ist, und eine der ersten Seite (36.1) gegenüberliegende zweite Seite (36.2) aufweist, in der ein zweites Strömungsfeld ausgebildet ist,
wobei die Vorrichtung (42) zwei gegensinnig rotierende Fügewalzen (26, 28) umfasst, zwischen denen ein Fügewalzenspalt zur Aufnahme und zum Zusammenpressen der beiden miteinander zu verbindenden Bipolarplattensubstrate (34, 36) ausgebildet ist; und
wobei eine erste der beiden Fügewalzen (26) auf ihrer Umfangsfläche zumindest eine erste Fügestruktur (58) zum zumindest bereichsweisen Eingriff in das erste Strömungsfeld eines ersten Bipolarplattensubstrats (34) und eine zweite der beiden Fügewalzen (28) auf ihrer Umfangsfläche zumindest eine zweite Fügestruktur (58) zum zumindest bereichsweisen Eingriff in das erste Strömungsfeld eines zweiten Bipolarplattensubstrats (36) aufweist.

11. Vorrichtung nach Anspruch 10,
**dadurch gekennzeichnet,**
**dass** die erste Fügestruktur (58) der ersten Fügewalze (26) und/oder die zweite Fügestruktur (58) der zweiten Fügewalze (28) eine oder mehrere Schweißelektroden oder Schweißsonotroden aufweist;
und/oder
**dass** die Größe des Fügewalzenspalts zur Anpassung an unterschiedlich dicke Bipolarplattensubstrate (34 ,36) einstellbar ist, wozu es insbesondere vorgesehen ist, dass die Position der ersten Fügewalze (26) und/oder die Position der zweiten Fügewalze (28) veränderbar ist;
und/oder
**dass** die beiden Fügewalze (26, 28) aufeinander zu vorgespannt sind;
und/oder
**dass** die Vorrichtung (42) stromaufwärts der beiden Fügewalzen (26, 28) eine Heizeinrichtung (22) zum Erwärmen jedes Bipolarplattensubstrats (34, 36) vor dem Durchlaufen des Fügewalzenspalts aufweist, wobei es insbesondere vorgesehen ist, dass die jeweilige Heizeinrichtung (22) als Wärmequelle mehrere Laserdioden, zumindest eine Induktionsspule und/oder zumindest einen Heizstab umfasst.

12. Vorrichtung nach zumindest einem der Ansprüche 10 und 11,
**dadurch gekennzeichnet,**
**dass** die Vorrichtung (42) stromabwärts der beiden Fügewalzen (26, 28) eine Heizeinrichtung (24) zum Erwärmen der miteinander verbundenen Bipolarplattensubstrate (34, 36) nach dem Durchlaufen des Fügewalzenspalts aufweist, wobei es insbesondere vorgesehen ist, dass die Heizeinrichtung (24) als Wärmequelle mehrere Laserdioden, zumindest eine Induktionsspule und/oder zumindest einen Heizstab umfasst;
und/oder
**dass** die Vorrichtung (42) ferner zwei gegensinnig rotierende Trennwalzen (30, 32) umfasst, welche zur Abtrennung von Bipolarplattenabschnitten von mittels der Fügewalzen (26, 28) miteinander verbundener Bipolarplattensubstrate (34, 36) ausgebildet sind, wobei es insbesondere vorgesehen ist, dass die Trennwalzen (30, 32) der stromabwärts gelegenen Heizeinrichtung (24) nachgeschaltet sind, wobei es insbesondere vorgesehen ist, die Vorrichtung (42) optional eine Geschwindigkeitsregeleinrichtung (62) umfasst, welche eingerichtet ist, um die Fügewalzen (26, 28) und die Trennwalzen (30, 32) antreibende Motoren (49, 60) so zu regeln, dass die Fügewalzen (26, 28) und die Trennwalzen (30, 32) mit derselben Umfangsgeschwindigkeit rotieren;
und/oder
**dass** die Vorrichtung (42) zumindest teilweise in einem Gehäuse (64) angeordnet ist, dessen Innenraum (66) gegenüber der Umgebungsatmosphäre (68) abgedichtet ist und das zumindest die Fügewalzen (26, 28) und vorzugsweise auch zumindest eine der Heizeinrichtungen (22, 24) aufnimmt; wobei es insbesondere vorgesehen ist, dass das Gehäuse (64) Öffnungen für die Zu- und Abfuhr eines Schutzgases und/oder Schlitze (70, 72, 74) zur Förderung eines Bipolarplattensubstrats (34, 36) in das Gehäuse (64) hinein und aus demselben heraus aufweist.

13. Vorrichtungsanordnung (10) zur Verwendung bei der Herstellung von Bipolarplatten, insbesondere für Brennstoffzellen, mit einer Vorrichtung (40, 41), vorzugsweise zwei Vorrichtungen (40, 41), nach zumindest einem der Ansprüche 7 bis 9 und einer stromabwärts davon befindlichen Vorrichtung (42) nach zumindest einem der Ansprüche 10 bis 12;
wobei es insbesondere vorgesehen ist, dass:
die Vorrichtungsanordnung (10) eine Geschwindigkeitsregeleinrichtung (56, 62) umfasst, welche eingerichtet ist, um die Stanzwalzen (12, 14), die Prägewalzen (16, 18), die Fügewalzen (26, 28) und die Trennwalzen (30, 32) antreibende Motoren (50, 48, 49, 60) so zu regeln, dass die Stanzwalzen (12, 14), die Prägewalzen (16, 18), die Fügewalzen (26, 28) und die Trennwalzen (30, 32) mit derselben Umfangsgeschwindigkeit rotieren;
und/oder
die Vorrichtungsanordnung (10) zumindest teilweise in einem einzigen Gehäuse (64) angeordnet ist, dessen Innenraum (66) gegenüber der Umgebungsatmosphäre (68) abgedichtet ist und das zumindest die Prägewalzen (16, 18), die den Prägewalzen (16, 18) vorgeschaltete Heizeinrichtung (20), die Fügewalzen (26, 28) und die den Fügewalzen (26, 28) vor- und nachgeschalteten Heizeinrichtungen (22, 24) aufnimmt.

14. Bipolarplatte, erhalten oder erhältlich durch ein Verfahren nach Anspruch 6.

15. Brennstoffzellenstapel mit mehreren Bipolarplatten nach Anspruch 14.
